(19) **Europäisches Patentamt / European Patent Office / Office européen des brevets**

(11) **EP 4 560 733 A1**

(12) **EUROPEAN PATENT APPLICATION**
published in accordance with Art. 153(4) EPC

(43) Date of publication:
**28.05.2025 Bulletin 2025/22**

(21) Application number: **23912814.3**

(22) Date of filing: **22.12.2023**

(51) International Patent Classification (IPC):
$H01M\ 4/525^{(2010.01)}$    $H01M\ 4/505^{(2010.01)}$
$H01M\ 4/131^{(2010.01)}$    $H01M\ 10/052^{(2010.01)}$
$H01M\ 4/02^{(2006.01)}$

(52) Cooperative Patent Classification (CPC):
**H01M 4/02; H01M 4/131; H01M 4/505;**
**H01M 4/525; H01M 10/052;** Y02E 60/10

(86) International application number:
**PCT/KR2023/021399**

(87) International publication number:
**WO 2024/144139 (04.07.2024 Gazette 2024/27)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **26.12.2022 KR 20220184869**

(71) Applicant: **LG Energy Solution, Ltd.**
**Seoul 07335 (KR)**

(72) Inventors:
• **KIM, Hyeong Il**
  **Daejeon 34122 (KR)**
• **PARK, Sang Min**
  **Daejeon 34122 (KR)**
• **KIM, Seul Ki**
  **Daejeon 34122 (KR)**
• **PARK, Byung Chun**
  **Daejeon 34122 (KR)**
• **LEE, Sang Wook**
  **Daejeon 34122 (KR)**
• **LHO, Eun Sol**
  **Daejeon 34122 (KR)**
• **HWANG, Jin Tae**
  **Daejeon 34122 (KR)**
• **OH, Su Yeon**
  **Daejeon 34122 (KR)**

(74) Representative: **Hoffmann Eitle**
**Patent- und Rechtsanwälte PartmbB**
**Arabellastraße 30**
**81925 München (DE)**

(54) **CATHODE ACTIVE MATERIAL, CATHODE COMPRISING SAME, AND LITHIUM SECONDARY BATTERY**

(57) The present invention relates to a cathode active material comprising a large-particle-diameter lithium nickel-based transition metal oxide and a small-particle-diameter lithium nickel-based transition metal oxide, wherein the large-particle-diameter lithium nickel-based transition metal oxide is in the form of a secondary particle, which is an aggregate of primary particles, and the small-particle-diameter lithium nickel-based transition metal oxide is in the form of at least one of a single particle composed of one nodule and a pseudo-single particle which is a composite of 30 or fewer nodules, and the P value, defined by a factor relating to the shape of a large-particle diameter particle and a factor relating to the specific surface area of a small-particle diameter particle is 1.00 or larger. The application of the cathode active material to a cathode suppresses the cracking of cathode active material particles, thereby providing a lithium secondary battery which exhibits improved lifespan and output characteristics along with a reduced amount of gas generation

EP 4 560 733 A1

**Description**

**TECHNICAL FIELD**

**CROSS-REFERENCE TO RELATED APPLICATIONS**

This application claims the benefit of priority to Korean Patent Application No. 10-2022-0184869 filed on December 26, 2022, the disclosure of which is incorporated herein by reference in its entirety.

**Technical Field**

The present invention relates to a positive electrode active material for a lithium secondary battery, and a positive electrode and a lithium secondary battery including the same.

**BACKGROUND ART**

A lithium secondary battery is generally composed of a positive electrode, a negative electrode, a separator, and an electrolyte, wherein the positive electrode and the negative electrode include an active material capable of intercalating and deintercalating lithium ions.

As a positive electrode active material for the lithium secondary battery, a lithium cobalt oxide (LiCoO2), a lithium nickel oxide ($LiNiO_2$), a lithium manganese oxide ($LiMnO_2$, $LiMnO_4$, or the like), a lithium iron phosphate compound ($LiFePO_4$), etc. have been used. Among them, the lithium cobalt oxide has the advantages of high operating voltage and excellent capacity characteristics, but the price of cobalt, which is a raw material, is high and its supply is unstable, making it difficult to commercially apply it to a large-capacity battery. The lithium nickel oxide has poor structural stability, making it difficult to achieve sufficient lifespan characteristics. Meanwhile, the lithium manganese oxide has excellent stability, but has a problem of poor capacity characteristics. Therefore, in order to compensate for the problems of the lithium transition metal oxides containing Ni, Co, or Mn alone, lithium nickel-based transition metal oxides containing two or more transition metals have been developed, and in particular, a lithium nickel cobalt manganese oxide containing Ni, Co, and Mn are widely used in the field of electric vehicle batteries.

Conventional lithium nickel cobalt manganese oxide was generally in the form of a spherical secondary particle in which tens to hundreds of primary particles are aggregated. However, in the case of the lithium nickel cobalt manganese oxide in the form of a secondary particle in which a large number of primary particles are aggregated, there is a problem in that particle breakage, in which primary particles fall off, is likely to occur during the rolling process when manufacturing a positive electrode, and cracks occur inside the particles during the charging and discharging process. When the particle breakage or cracks of the positive electrode active material are generated, the contact area with an electrolyte increases, which increases generation of gas and deterioration of the active material due to side reactions with the electrolyte, thereby degrading lifespan characteristics.

**DISCLOSURE OF THE INVENTION**

**TECHNICAL PROBLEM**

The present invention is intended to solve the above problems and provide a positive electrode active material that can suppress particle breakage and cracks during the electrode manufacturing and charging/discharging process, and has excellent rolling density.

In addition, the present invention is to provide a positive electrode and a lithium secondary battery which include the above positive electrode active material, thereby having a low crack rate (fine powder generation rate) and thus reduced side reactions with an electrolyte, which lead to improved high temperature lifespan, output, and high temperature storage characteristics.

**TECHNICAL SOLUTION**

In order to solve the above problems, according to one aspect of the present invention, there is provided a positive electrode active material including: a lithium nickel-based transition metal oxide with a large particle diameter and a lithium nickel-based transition metal oxide with a small particle diameter, wherein the lithium nickel-based transition metal oxide with a large particle diameter is in the form of a secondary particle that is an aggregate of primary particles, and the lithium nickel-based transition metal oxide with a small particle diameter is in the form of at least one of a single particle formed of one nodule and a quasi-single particle that is a composite of 30 or less nodules, and wherein a P value defined by the following Equation 1 is 1.00 or more:

$$[Equation\ 1]$$

$$P = (A_L \times R_L \times C_L) / B_S$$

wherein the $A_L$, $R_L$, and $C_L$ are respectively an aspect ratio, a circularity, and a convexity of the large-particle-diameter lithium nickel-based transition metal oxide, and the $B_S$ is an unitless number of a BET specific surface area ($m^2/g$) of the small-particle-diameter lithium nickel-based transition metal oxide.

In order to solve the above problems, according to another aspect of the present invention, there is provided a positive electrode including the positive electrode active material according to the present invention.

In order to solve the above problems, according to still another aspect of the present invention, there is provided a lithium secondary battery including the positive electrode according to the present invention.

## ADVANTAGE EFFECTS

The positive electrode active material for a lithium secondary battery according to the present invention includes a mixture of a lithium nickel-based transition metal oxide in the form of a single particle and/or a quasi-single particle with excellent particle strength, and a lithium nickel-based transition metal oxide in the form of a secondary particle that is an aggregate of primary particles, wherein the two types of particles satisfy specific conditions, thereby reducing the occurrence of particle breakage or cracks caused by rolling when manufacturing the electrode, and achieving an excellent level of rolling density.

In addition, in the positive electrode active material for a lithium secondary battery according to the present invention, particle breakage can be minimized, thereby reducing side reactions with the electrolyte and thus the amount of gas generated. Further, changes in the crystal structure can be minimized during the charging and discharging process, thereby suppressing the deterioration of the positive electrode active material, and thus improving high-temperature lifespan characteristics and high-temperature storage characteristics. Moreover, the output characteristics can be excellent due to a low resistance increase rate.

## MODE FOR CARRYING OUT THE INVENTION

The terms or words used in the specification and claims of the present application should not be construed as being limited to their ordinary or dictionary meanings, but should be interpreted as meanings and concepts consistent with the technical spirit of the present invention, based on the principle that the inventor may adequately define the concepts of terms to best describe his invention.

It should be understood that terms such as "comprise", "include", and "have" as used herein are intended to designate the presence of implemented features, numbers, steps, components, or combinations thereof, but not to preclude a possibility of existence or addition of one or more other features, numbers, steps, components, or combinations thereof.

In the present disclosure, a "single particle" is a particle formed of a single nodule. In the present disclosure, the "nodule" refers to a particle unit that may be a single crystal lacking a crystalline grain boundary, or a polycrystal with no apparent grain boundary when observed at a field of view of 5,000 to 20,000 times using a scanning electron microscope (SEM). In the present disclosure, a "quasi-single particle" refers to a particle that is a composite formed of 30 or less nodules.

In the present disclosure, a "secondary particle" refers to a particle formed by agglomerating tens to hundreds of primary particles. More specifically, the secondary particle is an agglomerate of 50 primary particles or more.

The term "particle" used in the present disclosure may include any one or all of a single particle, a quasi-single particle, a primary particle, a nodule, and a secondary particle.

In the present disclosure, a "$D_{50}$" refers to a particle size based on 50% of a volume cumulative particle size distribution of a positive electrode active material powder. The average particle diameter $D_{50}$ can be measured using a laser diffraction method. For example, the positive electrode active material powder is dispersed in a dispersion medium, and then introduced into a commercially available laser diffraction particle size measurement device (e.g., Microtrac MT 3000) and irradiated with an ultrasonic wave of about 28 kHz with an output of 60 W. Thereafter, the average particle diameter can be determined by obtaining a volume cumulative particle size distribution graph, and then obtaining a particle size corresponding to 50% of the volume cumulative amount.

In the present invention, "aspect ratio", "circularity", and "convexity" are values derived from the minimum particle

diameter ($D_{min}$, short diameter), maximum particle diameter ($D_{max}$, long diameter), area, actual circumference, and protrusion circumference of the particles through an image analysis program for a two-dimensional image of particles obtained using an image of positive electrode active material particle through scanning electron microscope (SEM). These values refer to the average value of tens to hundreds of particles, preferably 300 particles in the present invention.

Here, the aspect ratio, circularity, convexity can be calculated by the following Equations A to C:

$$[\text{Equation A}]$$

$$\text{Aspect Ratio} = D_{min}/D_{max}$$

$$[\text{Equation B}]$$

$$\text{Roundness} = (4 \times \text{area}) / (\pi \times (D_{max})2)$$

Convexity = (protrusion circumference) / (actual circumference)          [Equation C]

In Equation C above, the protrusion circumference refers to a circumference of the particle obtained by connecting the protruding portion in a straight line for the two-dimensional particle, that is, a circumference when the particle to be measured is wrapped with an elastic band. The actual circumference is a circumference of the particle obtained by connecting the actual perimeter of the particle.

Hereinafter, the present invention will be described in more detail.

**Positive Electrode Active Material**

A positive electrode active material according to the present invention may include: a lithium nickel-based transition metal oxide with a large particle diameter and a lithium nickel-based transition metal oxide with a small particle diameter, wherein the lithium nickel-based transition metal oxide with a large particle diameter is in the form of a secondary particle that is an aggregate of primary particles, and the lithium nickel-based transition metal oxide with a small particle diameter is in the form of at least one of a single particle formed of one nodule and a quasi-single particle that is a composite of 30 or less nodules, and wherein a P value defined by the following Equation 1 is 1.00 or more:

$$[\text{Equation 1}]$$

$$P = (A_L \times R_L \times C_L) / B_S$$

wherein the $A_L$, $R_L$, and $C_L$ are respectively an aspect ratio, a circularity, and a convexity of the large-particle-diameter lithium nickel-based transition metal oxide, and the $B_S$ is an unitless number of a BET specific surface area ($m^2/g$) of the small-particle-diameter lithium nickel-based transition metal oxide.

The present inventors have proposed particle characteristics that could take both advantages in terms of the active material particle breakage and energy density by mixing a large-particle-diameter lithium nickel-based transition metal oxide in the form of a secondary particle having an advantage in terms of energy density, and a small-particle-diameter lithium nickel-based transition metal oxide in the form of a single particle and/or a quasi-single particle having reduced particle breakage.

According to an embodiment of the present invention, the P value derived by Equation 1 may be 1.00 or more, preferably 1.01 or more, or 1.02 or more, and preferably 2.50 or less, 2.30 or less, 2.10 or less, or 2.05 or less, more preferably 2.01 or less.

The P value represents a ratio of the aspect ratio, circularity, and convexity of the large-particle-diameter lithium nickel-based transition metal oxide to the specific surface area of the small-particle-diameter lithium nickel-based transition metal oxide, and is conceived in view the fact that in the case of a secondary particle form, in light of the particle characteristics in which hundreds of primary particles are collected to form an aggregate, the particle shape acts as a more important factor in the crack rate or rolling density than the specific surface area, but in the case of a single particle and/or quasi-single particle form, the specific surface area may act as a more important factor than the particle shape in that it is a form in which there are about 30 or less primary particles, i.e., nodules.

That is, when the P value is 1.00 or more, it can mean that all of the energy density, the particle breakage, and the crack rate can be supplemented. When the P value is less than 1.00, there are many irregular shapes of the secondary particles, and thus, gas may be severely generated due to side reactions caused by particle breakage. Further, there is a problem in that life characteristics may be deteriorated, or capacity and output characteristics may be poor due to low energy density.

In other words, even if the shape of the secondary particles is composed of only those close to a spherical shape, when the specific surface area of the active material particles in the form of single particles and/or quasi-single particles to be mixed is large, the above problem may occur. Even if the shape of the secondary particles is not completely spherical, when the specific surface area of the active material particles in the form of single particles and/or quasi-single particles is small, this can be compensated to prevent the occurrence of the above problem.

According to an embodiment of the present invention, the large-particle-diameter lithium nickel-based transition metal oxide may have an aspect ratio of 0.85 or more, a circularity of 0.85 or more, and a convexity of 0.935 or more. Here, the aspect ratio, circularity, and convexity may be values obtained by using an image analysis program for an image obtained by photographing lithium nickel-based transition metal oxide particles with a scanning electron microscope, and may be an average value of about 100 or more particles.

The large-particle-diameter lithium nickel-based transition metal oxide may have an aspect ratio of 0.87 or more, 0.88 or more, 0.90 or more, or 0.91 or more, a circularity of 0.87 or more, 0.88 or more, 0.90 or more, or 0.91 or more, and a convexity of 0.937 or more, 0.939 or more, 0.940 or more, or 0.941 or more.

In addition, according to an embodiment of the present invention, the small-particle-diameter lithium nickel-based transition metal oxide may have a BET specific surface area of 0.60 $m^2$/g to 1.10 $m^2$/g. Preferably, the BET specific surface area may be 0.63 $m^2$/g or more, 0.65 $m^2$/g or more, or 0.66 $m^2$/g or more, and 1.07 $m^2$/g or less, 1.05 $m^2$/g or less, or 1.03 $m^2$/g or less.

When the aspect ratio, circularity, and convexity of the large-particle-diameter lithium nickel-based transition metal oxide and the BET specific surface area of the small-particle-diameter lithium nickel-based transition metal oxide satisfy the above range, particle characteristics of the mixed active material can be easily controlled such that the P value is 1.00 or more, and thus, performance of the electrode and the battery can be improved.

According to an embodiment of the present invention, the small-particle-diameter lithium nickel-based transition metal oxide may have an aspect ratio of 0.80 or more, a circularity of 0.80 or more, and a convexity of 0.900 or more. The small-particle-diameter lithium nickel-based transition metal oxide may have an aspect ratio of 0.81 or more, 0.82 or more, 0.83 or more, or 0.85 or more, a circularity of 0.81 or more, 0.82 or more, 0.83 or more, or 0.85 or more, and a convexity of 0.937 or more, 0.939 or more, 0.940 or more, or 0.941 or more.

In addition, in accordance with one embodiment of the present invention, the large-particle-diameter lithium nickel-based transition metal oxide may have a BET specific surface area of 0.40 $m^2$/g to 0.60 $m^2$/g, preferably 0.42 $m^2$/g or more, 0.45 $m^2$/g or more, or 0.47 $m^2$/g or more, and 0.57 $m^2$/g or less, 0.55 $m^2$/g or less, or 0.53 $m^2$/g or less.

The aspect ratio, circularity, and convexity of the small-particle-diameter lithium nickel-based transition metal oxide and the BET specific surface area of the large-particle-diameter lithium nickel-based transition metal oxide do not affect the P value, and do not significantly affect the particle breakage, but when the above range is satisfied, energy density can be improved to contribute to performance improvement.

According to one embodiment of the present invention, the mixing weight ratio of the lithium nickel-based transition metal oxide with a large particle diameter and the lithium nickel-based transition metal oxide with a small particle diameter may be 90:10 to 40:60, preferably 85:15 or less, 80:20 or less, and 50:50 or more or 60:40 or more. It may be desirable that the mixed weight ratio of the large-particle-diameter lithium nickel-based transition metal oxide to the small-particle-diameter lithium nickel-based transition metal oxide satisfy the above range in consideration of problems such as a decrease in life and an increase in gas generation caused by particle breakage, a lack of a conductive path, slurry process issues, and an increase in linear pressure during the rolling process.

Meanwhile, the positive electrode active material according to the present invention may include a lithium nickel-based transition metal oxides, and specifically, a lithium nickel-based transition metal oxide having a composition shown in Chemical Formula 1 below:

[Chemical Formula 1] $\quad$ $Li_{1+x}Ni_aCo_bM^1_cM^2_dO_{2-e}X_e$

wherein $M^1$ includes one or more selected from Mn and Al; $M^2$ includes one or more selected from the group consisting of W, Zr, Y, Ba, Ca, Ti, V, Mg, Ta and Nb; X includes one or more selected from the group consisting of N, P, S, F and Cl; and $0 \le x \le 0.5$, $0.5 \le a < 1$, $0 < b \le 0.4$, $0 < c \le 0.4$, $0 \le d \le 0.05$, and $0 \le e \le 0.05$.

In Formula 1 above, $M^1$ is Mn, Al or a combination thereof, preferably Mn, or a combination of Mn and Al; and $M^2$ may be at least one selected from the group consisting of Zr, W, Y, Ba, Ca, Ti, Mg, Ta, and Nb, and preferably at least one selected from the group consisting of Zr, Y, Mg, and Ti, and more preferably Zr, Y, or a combination thereof. The $M^2$ element is not necessarily included, but when included in an appropriate amount, it can play a role in promoting grain growth during calcination or improving crystal structure stability. In addition, X is an anion substituted for the oxygen site and may include N, P, S, F, or Cl.

The 1+x represents a molar ratio of lithium in the lithium nickel-based transition metal oxide, and may be $0 \leq x \leq 0.30$, $0 \leq x \leq 0.20$, or $0 \leq x \leq 0.15$.

The a represents a molar ratio of nickel among all metals except lithium in the lithium nickel-based transition metal oxide, and may be $0.60 \leq a < 1.00$, $0.70 \leq a < 1.00$, $0.75 \leq a \leq 0.99$, $0.80 \leq a \leq 0.99$, $0.82 \leq a \leq 0.99$, $0.84 \leq a \leq 0.99$, or $0.86 \leq a \leq 0.99$. Here, the value a, that is, the content of nickel in the transition metal may be 60 mol% or more, preferably 70 mol% or more, or 75 mol% or more. The higher the nickel content and the lower the cobalt content, the more problematic the amount of gas generated and the capacity retention rate may be. However, when the p value is satisfied, the particle breakage can be reduced and the rolling density can be increased, thereby resulting in a little more synergy in that the positive electrode active material with a high nickel content has high capacity and high output characteristics, but the disadvantages can be offset.

The b represents a molar ratio of cobalt among all metals excluding lithium in the lithium nickel-based transition metal oxide, and may be $0 < b < 0.30$, $0.01 \leq b < 0.25$, $0.01 \leq b < 0.20$, or $0.01 \leq b \leq 0.15$.

The c represents a molar ratio of $M^1$ among all metals excluding lithium in the lithium nickel-based transition metal oxide, and may be $0 < c < 0.30$, $0.01 \leq c < 0.25$, $0.01 \leq c < 0.20$, or $0.01 \leq c \leq 0.15$.

The d represents a molar ratio of $M^2$ element among all metals excluding lithium in the lithium nickel-based transition metal oxide, and may be $0 \leq d \leq 0.05$, $0 \leq d \leq 0.03$, or $0 \leq d \leq 0.02$.

The e represents a molar ratio of element X among all non-metals excluding oxygen in the lithium nickel-based transition metal oxide, and may be $0 \leq e \leq 0.05$, $0 \leq e \leq 0.02$, or $0 \leq e \leq 0.01$.

Meanwhile, the lithium nickel-based transition metal oxide may further include, on the surface of the particle, a coating layer containing one or more coating elements selected from the group consisting of Al, Ti, W, B, F, P, Mg, Ni, Co, Fe, Cr, V, Cu, Ca, Zn, Zr, Nb. Mo, Sr, Sb, Bi, Si and S.

When the coating layer is present on the surface of the lithium nickel-based transition metal oxide particle, the contact between the electrolyte and the lithium nickel-based transition metal oxide can be suppressed by the coating layer, thereby having the effect of reducing transition metal elution or gas generation due to side reactions with the electrolyte.

Preferably, the coating layer may include Co as a coating element. When the coating layer containing Co is formed on the surface of the small-particle- diameter lithium nickel-based transition metal oxide in the form of single particles and/or quasi-single particles, and/or a large-particle-diameter lithium nickel-based transition metal oxide in the form of secondary particles, an effect of improving output can be obtained along with an effect of suppressing side reactions with the electrolyte.

## Method of Manufacturing Positive Electrode Active Material

Next, a method of manufacturing the positive electrode active material of the present invention will be described.

The method of manufacturing the positive electrode active material according to the present invention includes the steps of: (S1) preparing a positive electrode active material precursor by adding a transition metal-containing solution containing cations of nickel (Ni), cobalt (Co) and $M^1$, a basic aqueous solution, and an ammonium solution and performing a coprecipitation reaction; and (S2) preparing a positive electrode active material by mixing the positive electrode active material precursor and a lithium raw material and heat-treating them.

Through the condition of the coprecipitation reaction and the firing conditions such as the firing temperature and time of the lithium raw material and precursor, the manufactured positive electrode active material may be in the form of a single particle formed of one nodule or a quasi-single particle that is a composite of 30 or less nodules, or in the form of a secondary particle that is an aggregate of primary particles. The positive electrode active material according to the present invention can be obtained by preparing a large-particle-diameter lithium nickel-based transition metal oxide and a small-particle-diameter lithium nickel-based transition metal oxide separately and then mixing them.

Hereinafter, each step of the method of manufacturing the positive electrode active material will be described in detail.

First, the transition metal-containing solution containing cations of nickel (Ni), cobalt (Co), and $M^1$ is prepared. For example, the transition metal-containing solution may include a nickel-containing raw material, a cobalt-containing raw material, and an $M^1$-containing raw material, wherein the $M^1$-containing raw material may be a manganese-containing raw material and/or an aluminum-containing raw material.

Thereafter, the positive electrode active material precursor can be prepared by adding an ammonium cation-containing complex forming agent and a basic aqueous solution to the transition metal solution and performing a coprecipitation reaction.

The nickel-containing raw material may be, for example, a nickel-containing acetate, nitrate, sulfate, halide, sulfide, hydroxide, oxide, oxyhydroxide, or the like, and specifically, $Ni(OH)_2$, $NiO$, $NiOOH$, $NiCO_3 \cdot 2Ni(OH)_2 \cdot 4H_2O$, $NiC_2O_2 \cdot 2H_2O$, $Ni(NO_3)_2 \cdot 6H_2O$, $NiSO_4$, $NiSO_4 \cdot 6H_2O$, fatty acid nickel salt, nickel halide, or a combination thereof, but is not limited thereto.

The cobalt-containing raw material may be a cobalt-containing acetate, nitrate, sulfate, halide, sulfide, hydroxide, oxide, oxyhydroxide, or the like, and specifically, $Co(OH)_2$, $CoOOH$, $Co(OCOCH_3)_2 \cdot 4H_2O$, $Co(NO_3)_2 \cdot 6H_2O$, $CoSO_4$, $CoSO_4 \cdot 7H_2O$, or a combination thereof, but is not limited thereto.

The manganese-containing raw material may be, for example, a manganese-containing acetate, nitrate, sulfate, halide, sulfide, hydroxide, oxide, oxyhydroxide, or a combination thereof, and specifically, a manganese oxide such as $Mn_2O_3$, $MnO_2$, $Mn_3O_4$, etc.; a manganese salt such as $MnCO_3$, $Mn(NO_3)_2$, $MnSO_4$, manganese acetate, dicarboxylic acid manganese salt, manganese citrate, fatty acid manganese salt; a manganese oxyhydroxide, manganese chloride, or a combination thereof, but is not limited thereto.

The aluminum-containing raw material may be, for example, $Al_2O_3$, $Al(OH)_3$, $Al(NO_3)_3$, $Al_2(SO_4)_3$, $(HO)_2AlCH_3CO_2$, $HOAl(CH_3CO_2)_2$, $Al(CH_3CO_2)_3$, aluminum halides, or a combination thereof.

The transition metal-containing solution can be prepared by adding the nickel-containing raw material, cobalt-containing raw material, and $M^1$-containing raw material to a solvent, specifically water, or a mixed solvent of water and organic solvents (e.g. alcohol, etc.) that can be mixed uniformly with water, or by mixing an aqueous solution of the nickel-containing raw material, an aqueous solution of the cobalt-containing raw material, and the $M^1$-containing raw material.

The ammonium cation-containing complex forming agent may be, for example, $NH_4OH$, $(NH_4)_2SO_4$, $NH_4NO_3$, $NH_4Cl$, $CH_3COONH_4$, $(NH_4)_2CO_3$. or a combination thereof, but is not limited thereto. Meanwhile, the ammonium cation-containing complex former may be used in the form of an aqueous solution, wherein the solvent may be water, or a mixture of water and an organic solvent (specifically, alcohol, etc.) that is uniformly miscible with water.

The basic compound may be a hydroxide of an alkali metal or alkaline earth metal, such as $NaOH$, $KOH$, or $Ca(OH)_2$, a hydrate thereof, or a combination thereof. The basic compound may also be used in the form of an aqueous solution, wherein the solvent may be water, or a mixture of water and an organic solvent (specifically, alcohol, etc.) that is uniformly miscible with water.

The basic compound is added to adjust the pH of the reaction solution, and may be added in an amount such that the pH of the metal solution is 8 to 12.

The coprecipitation reaction may be performed at a temperature ranging from 35°C to 80°C under an inert atmosphere such as nitrogen or argon.

Accordingly, the positive electrode active material precursor containing cations of nickel, cobalt, and $M^1$ can be prepared.

Through the above process, positive electrode active material precursor particles of nickel-cobalt-$M^1$ hydroxide are produced and precipitated in the reaction solution. By controlling the concentrations of the nickel-containing raw material, cobalt-containing raw material and $M^1$-containing raw material, the positive electrode active material precursor can be prepared in which the nickel (Ni) content of the total metal content is 70 mol% or more, 75 mol% or more, preferably 80 mol% or more, more preferably 82 mol% or more. The precipitated positive electrode active material precursor particles can be separated and dried according to a conventional method to produce the positive electrode active material precursor.

Thereafter, the positive electrode active material precursor and the lithium raw material are mixed, and heat treated.

The lithium raw material may be lithium-containing sulfate, nitrate, acetate, carbonate, oxalate, citrate, halide, hydroxide, or oxyhydroxide, but is not particularly limited as long as it is soluble in water. Specifically, the lithium raw material may be $Li_2CO_3$, $LiNO_3$, $LiNO_2$, $LiOH$, $LiOH \cdot H_2O$, $LiH$, $LiF$, $LiCl$, $LiBr$, $LiI$, $CH_3COOLi$, $Li_2O$, $Li_2SO_4$, $CH_3COOLi$, or $Li_3C_6H_5O_7$, and any one or a mixture of two or more thereof may be used.

The positive electrode active material precursor and the lithium raw material may be mixed at a molar ratio of 1:1 to 1:1.30. The positive electrode active material precursor and the lithium raw material may be mixed, for example, at a molar ratio of about 1:1, about 1:1.05, about 1:1.07, about 1:1.10, about 1:1.5, about 1:1.20, or about 1:1.30, but are not limited thereto.

The heat treatment may be performed at a temperature ranging from 650°C to 1000°C in the case of a high-Ni NCM-based lithium composite transition metal oxide with a nickel (Ni) content of 70 mol% or more. The heat treatment may be preferably performed, for example, at a temperature ranging from 700°C to 925°C, and more preferably at a temperature ranging from 750°C to 910°C. The formation of the positive electrode active material powder in the form of a single particle and/or quasi-single particle is influenced by the conditions of heat treatment temperature.

Accordingly, the manufactured positive electrode active material can have reduced particle breakage and strain in the crystal structure during the rolling process or charging and discharging of a lithium secondary battery including the same, and can have improved initial resistance characteristics.

The heat treatment may be performed under an air or oxygen atmosphere, for example, for 4 to 12 hours. Specifically, the heat treatment may be performed, for example, for 4 hours or more, 6 hours or more, 8 hours or more, 10 hours or more, and for 12 hours or less, 10 hours or less, 8 hours or less, and 6 hours or less.

Meanwhile, when the lithium nickel-based transition metal oxide containing $M^2$ metal is to be prepared, or when the lithium nickel-based transition metal oxide containing a non-metal for anion substitution at an oxygen sites such as X is to be prepared, an $M^2$ metal-containing raw material and/or an X element-containing raw material may be additionally mixed during the coprecipitation reaction or in the firing step. In this case, the $M^2$ metal-containing raw material may be an acetate, carbonate, nitrate, sulfate, halide, sulfide, or oxide of the $M^2$ metal, and the X element-containing raw material may be a lithium salt of X or an acid containing X.

On the other hand, when it is desired to form a coating layer on the surface of the lithium nickel-based transition metal oxide, after the above heat treatment, a step of mixing the lithium nickel-based transition metal oxide prepared through the heat treatment and the coating raw material and then heat treating them may be further performed. In this case, the mixing may be accomplished by solid-phase mixing or liquid-phase mixing, and the heat treatment may be performed at an appropriate temperature depending on the coating raw material. For example, the heat treatment of the coating process may be performed at a temperature ranging from 200°C to 700°C, or 300°C to 600°C, but is not limited thereto.

Additionally, when manufacturing the positive electrode active material of the present invention, it is preferable not to perform a water washing process after the heat treatment. Conventionally, when manufacturing high-nickel (Ni) NCM-based lithium composite transition metal oxides, it was common to perform a water washing process after heat treatment to reduce the lithium byproduct content. However, according to the present inventors' research, it has been found that when a water washing process is performed in the production of the lithium nickel-based transition metal oxide in the form of a single particle and/or a quasi-single particle, the surface properties of the lithium nickel-based transition metal oxide deteriorate during the water washing process, and thus the resistance is increased. Therefore, when manufacturing the positive electrode active material of the present invention, it is preferable not to perform water washing, but to consume the remaining lithium on the surface of the lithium nickel-based transition metal oxide through the coating layer formation process. In this way, when the positive electrode active material is manufactured without washing the lithium nickel-based transition metal oxide, an increase in resistance due to surface defects can be suppressed.

Positive Electrode

The positive electrode according to the present invention includes the positive electrode active material of the present invention described above. Specifically, the positive electrode includes a positive electrode current collector and a positive electrode active material layer formed on the positive electrode current collector, wherein the positive electrode active material layer includes the positive electrode active material powder according to the present invention. Since the positive electrode active material powder has been described above, a detailed description thereof will be omitted, and only the remaining components will be described in detail below.

The positive electrode current collector may include a highly conductive metal, and is not particularly limited as long as the positive electrode active material layer can be easily adhered thereto and is non-reactive within the voltage range of the battery. The positive electrode current collector may be, for example, stainless steel, aluminum, nickel, titanium, heat-treated carbon, or aluminum or stainless steel having a surface treated with carbon, nickel, titanium, silver, etc. Additionally, the positive electrode current collector may typically have a thickness of 3 to 500 $\mu$m, and may have fine irregularities formed on the surface of the current collector to increase the adhesion of the positive electrode active material. For example, it may be used in various forms such as a film, a sheet, a foil, a net, a porous body, a foam, a non-woven fabric, or the like.

The positive electrode active material layer, along with the positive electrode active material powder, may optionally include a conductive material and a binder, if necessary.

In this case, the positive electrode active material powder may be included in an amount of 80% to 99% by weight, more specifically 85% to 98.5% by weight, based on the total weight of the positive electrode active material layer, and can exhibit excellent capacity characteristics when included in the above content range.

The conductive material is used to impart conductivity to the electrode, and may be any material without particular limitation as long as it has electroconductivity without causing a chemical change in a battery to be configured. Specific examples thereof may include graphite such as natural graphite or artificial graphite; a carbon-based material such as carbon black, acetylene black, Ketjen black, channel black, furnace black, lamp black, thermal black, and carbon fiber; a powder or fiber of metal such as copper, nickel, aluminum, silver, etc.; a conductive tube such as carbon nanotube; a conductive whisker such as a zinc oxide whisker and a potassium titanate whisker; a conductive metal oxide such as a titanium oxide; or a conductive polymer such as a polyphenylene derivative, and any one or a mixture of two or more thereof may be used. The conductive material may be included in an amount of 0.1 to 15% by weight based on the total weight of the positive electrode active material layer.

The binder serves to improve the bonding between the positive electrode active material particles and the adhesion between the positive electrode active material and the current collector. Specific examples thereof may include polyvinylidene fluoride (PVDF), polyvinylidene fluoride-hexafluoropropylene copolymer (PVDF-co-HFP), polyvinyl alcohol, polyacrylonitrile, polymethyl methacrylate, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene polymer (EPDM), sulfonated EPDM, styrene-butadiene rubber (SBR), fluorine rubber, polyacrylic acid, the polymers in which hydrogen is substituted with Li, Na, or Ca, or various copolymers thereof, and any one or a mixture of two or more thereof may be used. The binder may be included in an amount of 0.1 to 15% by weight based on the total weight of the positive electrode active material layer.

The positive electrode may be manufactured according to a conventional positive electrode manufacturing method except for the use of the positive electrode active material powder described above. Specifically, the above positive electrode active material powder and, if necessary, a binder, a conductive material, and a dispersant are dissolved or dispersed in a solvent to prepare a positive electrode slurry composition. This slurry composition can be applied on a positive electrode current collector, and then dried and rolled to produce a positive electrode.

The solvent may be any solvent commonly used in the art, for example, dimethyl sulfoxide (DMSO), isopropyl alcohol, N-methyl pyrrolidone (NMP), dimethylformamide (DMF), acetone, water, or the like, and any one or a mixture of two or more thereof may be used. The solvent may be used in an amount sufficient to dissolve or disperse the positive electrode active material, conductive material, binder and dispersant in consideration of the application thickness of the slurry and the manufacturing yield, and to allow the slurry to have a viscosity capable of exhibiting excellent thickness uniformity when applied for the subsequent positive electrode production.

Alternatively, the positive electrode may be manufactured by casting the positive electrode slurry composition on a separate support, peeling a film from the support, and then laminating the film on a positive electrode current collector.

Electrochemical Device

Next, an electrochemical device according to the present invention will be described. The electrochemical device according to the present invention includes the positive electrode of the present invention described above. Specifically, the electrochemical device may be a battery, a capacitor, etc., and more specifically, a lithium secondary battery.

Specifically, the lithium secondary battery includes a positive electrode, a negative electrode positioned opposite the positive electrode, and a separator and electrolyte interposed between the positive electrode and the negative electrode. Since the positive electrode is the same as described above, a detailed description thereof is omitted, and only the remaining components will be described in detail below.

In addition, the lithium secondary battery may optionally further include a battery container for accommodating an electrode assembly formed of the positive electrode, negative electrode, and separator, and a sealing member for sealing the battery container.

In the lithium secondary battery, the negative electrode includes a negative electrode current collector and a negative electrode active material layer disposed on the negative electrode current collector.

The negative electrode current collector is not particularly limited as long as it has a high conductivity without causing a chemical change in a battery, and may be, for example, copper, stainless steel, aluminum, nickel, titanium, heat-treated carbon, copper or stainless steel that is surface-treated with carbon, nickel, titanium, silver, or the like, an aluminum-cadmium alloy, or the like. Additionally, the negative electrode current collector may typically have a thickness of 3 to 500 $\mu$m, and like the positive electrode current collector, may have fine irregularities formed on the surface of the current collector to increase the adhesion of the negative electrode active material. For example, it may be used in various forms such as a film, a sheet, a foil, a net, a porous body, a foam, a non-woven fabric, or the like.

The negative electrode active material layer optionally includes a binder and a conductive material along with the negative electrode active material.

As the negative electrode active material, a compound capable of reversible intercalation and deintercalation of lithium may be used. Specific examples thereof may include a carbonaceous material such as artificial graphite, natural graphite, graphitized carbon fiber, and amorphous carbon; a metallic substance alloyable with lithium, such as Si, Al, Sn, Pb, Zn, Bi, In, Mg, Ga, Cd, an Si alloy, an Sn alloy, or an Al alloy; a metal oxide capable of doping and dedoping lithium, such as SiO$\beta$ (0<$\beta$<2), SnO2, vanadium oxide, and lithium vanadium oxide; or a composite including the metallic substance and the carbonaceous material, such as an Si-C composite or an Sn-C composite, and any one or a mixture of two or more thereof may be used. Also, a metal lithium thin film may also be used as the negative electrode active material. Additionally, as the carbon material, low crystalline carbon, high crystalline carbon, or the like may all be used. Representative examples of the low crystalline carbon may include soft carbon and hard carbon, and representative examples of the high crystalline carbon may include amorphous, plate-shaped, flaky, spherical, or fibrous natural graphite or artificial graphite, Kish graphite, pyrolytic carbon, mesophase pitch-based carbon fiber, meso-carbon microbeads, mesophase pitches, and high-temperature heat-treated carbon such as petroleum or coal tar pitch derived cokes.

The negative electrode active material may be included in an amount of 80% to 99% by weight based on the total weight of the negative electrode active material layer.

The binder is a component that assists in bonding between the conductive material, the active material, and the current collector, and is usually added in an amount of 0.1% to 10% by weight based on the total weight of the negative electrode active material layer. Examples of such binders include polyvinylidene fluoride (PVDF), polyvinyl alcohol, carboxymethylcellulose (CMC), starch, hydroxypropyl cellulose, regenerated cellulose, polyvinylpyrrolidone, polytetrafluoroethylene, polyethylene, polypropylene, ethylene-propylene-diene polymer (EPDM), sulfonated EPDM, styrene-butadiene rubber, nitrile-butadiene rubber, fluorine rubber, and various copolymers thereof.

The conductive material is a component to further improve the conductivity of the negative electrode active material, and may be added in an amount of 10% by weight or less, preferably 5% by weight or less, based on the total weight of the negative electrode active material layer. The conductive material is not particularly limited as long as it has conductivity without causing a chemical change in the battery, and may be, for example, graphite such as natural graphite or artificial graphite; carbon black such as acetylene black, Ketjen black, channel black, furnace black, lamp black, and thermal black; conductive fibers such as carbon fiber and metal fiber; fluorinated carbon; metal powder such as aluminum powder and nickel powder; conductive whiskers such as zinc oxide whisker and potassium titanate whisker; conductive metal oxides such as titanium oxide; conductive materials such as polyphenylene derivatives.

The negative electrode active material and optionally a binder and a conductive material are dissolved or dispersed in a solvent to prepare a negative electrode slurry composition, which may be applied on a negative electrode current collector and dried to produce a negative electrode active material layer. Alternatively, the negative electrode active material layer may be manufactured by casting the negative electrode slurry composition on a separate support, peeling a film from the support, and then laminating the film on a negative electrode current collector.

Meanwhile, in the lithium secondary battery, the separator is to separate the negative electrode and the positive electrode, and to provide a passage for lithium ions to move. Any separator may be used without particular limitation as long as it is generally used as a separator in a lithium secondary battery. Particularly, a separator having excellent moisture-retention ability for an electrolyte while having low resistance to the migration of electrolyte ions is preferable. Specifically, a porous polymer film, for example, a porous polymer film made of polyolefin-based polymers such as ethylene homopolymer, propylene homopolymer, ethylene/butene copolymer, ethylene/hexene copolymer, and ethylene/methacrylate copolymer, or a laminated structure having two or more layers thereof may be used. In addition, a conventional porous nonwoven fabric, for example, a nonwoven fabric made of high melting point glass fiber, polyethylene terephthalate fiber, or the like may also be used. Further, in order to secure heat resistance or mechanical strength, a coated separator containing a ceramic component or a polymer material may also be used, and may optionally be used in a single-layer or multilayer structure.

In addition, the electrolyte used in the present invention may be an organic liquid electrolyte, an inorganic liquid electrolyte, a solid polymer electrolyte, a gel-type polymer electrolyte, a solid inorganic electrolyte, a molten inorganic electrolyte, or the like which may be used in the preparation of a lithium secondary battery, but is not limited thereto.

Specifically, the electrolyte may include an organic solvent and a lithium salt.

As the organic solvent, any solvent may be used without particular limitation as long as it can serve as a medium through which ions involved in the electrochemical reaction of the battery can move. Specifically, the organic solvent may be an ester-based solvent such as methyl acetate, ethyl acetate, $\gamma$-butyrolactone, or $\varepsilon$-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC); an alcohol-based solvent such as ethyl alcohol or isopropyl alcohol; nitriles such as R-CN (R is a straight, branched or cyclic $C_2$-$C_{20}$ hydrocarbon group, and may include a double-bond aromatic ring or ether bond); amides such as dimethylformamide; dioxolanes such as 1,3-dioxolane; or sulfolanes. Among them, the carbonate-based solvent is preferable, and a mixture of a cyclic carbonate (e.g., ethylene carbonate, propylene carbonate, etc.) having high ionic conductivity and high-dielectric constant capable of increasing charge/discharge performance of the battery and a low-viscosity linear carbonate-based compound (e.g., ethyl methyl carbonate, dimethyl carbonate, diethyl carbonate, etc.) is more preferable.

The lithium salt may be any compound without particular limitation as long as it can provide lithium ions used in a lithium secondary battery. Specifically, the anion of the lithium salt may be at least one selected from the group consisting of $F^-$, $Cl^-$, $Br^-$, $I^-$, $NO3-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, and the lithium salt may be $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, $LiB(C_2O_4)_2$, or the like. The lithium salt is preferably used at a concentration ranging from 0.1 to 2.0 M. When the concentration of the lithium salt is within the above range, the electrolyte has an appropriate conductivity and viscosity, whereby excellent electrolyte performance can be exhibited, and lithium ions can effectively move.

In order to improve the lifespan characteristics of the battery, suppress a reduction in battery capacity and improve discharge capacity of the battery, the electrolyte may further include, in addition to the above electrolyte components, one or more additives, for example, a halo-alkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinones, N,N-substituted imidazolidine, ethylene glycol dialkyl ether, an ammonium salt, pyrrole, 2-methoxy ethanol, or aluminum trichloride. In this case, the additives may be included in an amount of 0.1% to 5% by weight based on the total weight of the electrolyte.

Example

Hereinafter, examples of the present invention will be described in detail so that those skilled in the art can easily implement the present invention. However, the present invention may be embodied in a variety of forms and is not limited to the examples described herein.

Example 1

A large-particle-diameter lithium nickel-based transition metal oxide was prepared, which has a Ni:Co:Mn molar ratio of 8:1:1, is a secondary particle powder which is an aggregate of primary particles, and a long diameter to short diameter ratio (aspect ratio) of 0.94, a circularity of 0.93, a convexity of 0.943, and a BET specific surface area of 0.48 $m^2$/g. A small-particle-diameter lithium nickel-based transition metal oxide was prepared, which has a Ni:Co:Mn molar ratio of 8:1:1, is a powder of single particles or quasi-single particles, and a long diameter to short diameter ratio (aspect ratio) of 0.86, a circularity of 0.85, a convexity of 0.925, and a BET specific surface area of 0.80 $m^2$/g. The large-particle-diameter and small-particle-diameter lithium nickel-based transition metal oxides were mixed at a weight ratio of 7:3 to prepare a positive electrode active material having a P value as described in Table 1 below.

Examples 2 to 4 and Comparative Examples 1 to 4

The large-particle-diameter and small-particle-diameter lithium nickel-based transition metal oxides having particle size characteristics as shown in Table 1 below were mixed to prepare positive electrode active materials of Examples 2 to 4 and Comparative Examples 1 to 4 having a P value as described in Table 1 below.

Experimental Example 1: Confirmation of Particle Characteristics of Positive Electrode Active Material

For each of the positive electrode active materials prepared in Examples 1 to 4 and Comparative Examples 1 to 4, the positive electrode active material particles were photographed at 800 magnification using a scanning electron microscope (SEM, Hitachi, S-4800) to obtain an image in which about 300 particles were photographed. Particles in the SEM image were two-dimensionalized through an image analysis program (Image J), and the minimum particle diameter ($D_{min}$, short diameter), maximum particle diameter ($D_{max}$, long diameter), area, and protrusion circumference were measured for the two-dimensional image. The measured values were substituted into the following Equations A to C to derive the average values of the aspect ratio, circularity, and convexity, which were shown in Table 1 below.

$$[Equation\ A]$$

$$Aspect\ Ratio\ =\ D_{min}/D_{max}$$

$$[Equation\ B]$$

$$Roundness\ =\ (4\ x\ area)\ /\ (\pi\ x\ (D_{max})2)$$

$$Convexity = (protrusion\ circumference) / (actual\ circumference) \qquad [Equation\ C]$$

The protrusion circumference refers to a circumference of the particle obtained by connecting the protruding portion in a straight line for the two-dimensional particle, that is, a circumference when the particle to be measured is wrapped with an elastic band. The actual circumference is a circumference of the particle obtained by connecting the actual perimeter of the particle.

In addition, the BET specific surface area ($m^2$/g) was measured by the BET method, and calculated from the amount of nitrogen gas adsorbed under liquid nitrogen temperature (77K) using BELSORP-mino II of BEL Japan. The results were shown in Table 1 below.

In addition, the P value expressed in Equation 1 was also shown in Table 1 below.

[Equation 1]

$$P = (A_L \times R_L \times C_L) / B_S$$

wherein the $A_L$, $R_L$, and $C_L$ are respectively an aspect ratio, a circularity, and a convexity of the large-particle-diameter lithium nickel-based transition metal oxide, and the $B_S$ is an unitless number of a BET specific surface area (m²/g) of the small-particle-diameter lithium nickel-based transition metal oxide.

[Table 1]

|  | Large particle diameter | | | | Small particle diameter | | | | P |
|---|---|---|---|---|---|---|---|---|---|
|  | Asp ect rat io | Cir cul ari ty | Conv exit y | BET | Asp ect rat io | Cir cul ari ty | Conv exit y | BET |  |
| Example 1 | 0.9 4 | 0.9 3 | 0.94 3 | 0.4 8 | 0.8 6 | 0.8 5 | 0.92 5 | 0.8 0 | 1.0 3 |
| Example 2 | 0.9 3 | 0.9 3 | 0.94 2 | 0.4 9 | 0.8 1 | 0.7 8 | 0.91 2 | 0.6 7 | 1.2 2 |
| Example 3 | 0.9 3 | 0.9 4 | 0.94 4 | 0.4 8 | 0.9 1 | 0.7 6 | 0.90 0 | 0.4 1 | 2.0 1 |
| Example 4 | 0.8 5 | 0.8 3 | 0.93 1 | 0.8 4 | 0.8 1 | 0.8 1 | 0.92 1 | 0.5 5 | 1.1 9 |
| Comparati ve Example 1 | 0.9 3 | 0.9 3 | 0.94 1 | 0.5 | 0.7 9 | 0.7 4 | 0.88 9 | 1.1 1 | 0.7 3 |
| Comparati ve Example 2 | 0.8 5 | 0.8 3 | 0.93 1 | 0.8 4 | 0.8 1 | 0.7 8 | 0.91 2 | 0.6 7 | 0.9 8 |
| Comparati ve Example 3 | 0.9 0 | 0.9 0 | 0.93 6 | 0.6 2 | 0.8 2 | 0.8 0 | 0.91 3 | 0.9 1 | 0.8 3 |
| Comparati ve Example 4 | 0.8 5 | 0.8 3 | 0.92 8 | 0.8 5 | 0.7 7 | 0.7 3 | 0.89 0 | 1.1 0 | 0.6 0 |

Experimental Example 2: Rolling Density of Positive Electrode Active Material

The rolling density (g/cm³) of each positive electrode active material prepared in Examples 1 to 4 and Comparative Examples 1 to 4 was measured using a density meter (Caver Pellet Press). Specifically, 3 g of each positive electrode active material prepared in the above examples and comparative examples was subdivided and filled tightly into a cylindrical holder with a diameter of 13 mm, and then a pressure of 9 tons was applied to measure the rolling density (g/cm³). The results are shown in Table 2 below.

In addition, the amount of fine powder generated (% by volume) was calculated for an area of 1 $\mu$m or less by applying a pressure of 6 tons to the positive electrode active material using a rolling density meter (Carver Pellet Press), and then using the value obtained from the particle size analysis (PSD).

[Table 2]

|  | Rolling density (g/cm³) | Amount of fine powder generated (% by volume) |
|---|---|---|
| Example 1 | 3.24 | 5.9 |
| Example 2 | 3.31 | 3.4 |
| Example 3 | 3.16 | 2.9 |
| Example 4 | 3.22 | 4.1 |
| Comparative Example 1 | 3.20 | 8.5 |
| Comparative Example 2 | 3.26 | 4.4 |
| Comparative Example 3 | 3.21 | 6.7 |
| Comparative Example 4 | 3.25 | 10.0 |

Referring to Table 2, it can be seen that the rolling density of the examples satisfying the P value was superior to that of Comparative Examples 1 to 4, and the amount of fine powder generated in Comparative Example 4 having a relatively high rolling density was also considerably high.

Experimental Example 3: Evaluation of High Temperature Storage Characteristics

A pouch cell including a positive electrode comprising each of the positive electrode active materials of Examples 1 to 4 and Comparative Examples 1 to 4, and a carbon negative electrode was prepared, and then charged to 4.2V. Then, two electrodes (loading amount: 400 mg/25 cm$^2$) charged at a voltage of 4.2V and two separators were put in an aluminum (Al) pouch having a size of 6 X 6 cm, placed on a lower plate of the coin cell, and fixed with a gasket. Thereafter, 400 ul of an electrolyte (EC/EMC) was vacuum injected twice, and each side was vacuum sealed with a thickness of 0.5 cm. Here, the vacuum sealing refers to sealing under monocell vacuum sealing conditions of 95kPa/93kPa. The coin half cells manufactured as above were stored in a convection oven at 60°C for 10 weeks, and then the amount of gas generated (volume change rate, %) was evaluated by comparing a change in the cell volume. The results are shown in Table 3 below.

Experimental Example 4: Evaluation of High Temperature Lifespan and Resistance Characteristics

A monocell including a positive electrode and a negative electrode was manufactured. In the case of the positive electrode, each of the positive electrode active material powders prepared in Examples 1 to 4 and Comparative Examples 1 to 4 was applied to a current collector and dried to prepare the positive electrode. In the case of the negative electrode, natural graphite and artificial graphite were mixed in a ratio of 5:5 and used as a negative electrode active material, and the negative electrode was prepared using 95.6 wt% of the negative electrode active material, 0.9 wt% of a conductive material, and 3.4 wt% of a binder. The loading of the negative electrode was 10.7 mg/cm$^2$, and the N/P ratio of the negative electrode and positive electrode was fixed at 1.08.

The capacity retention rate (%) of the mono cell including the positive electrode active material powders of Examples 1 and 2 and Comparative Examples 1 to 4 was measured for 300 cycles at a temperature of 45°C. When evaluating lifespan under the above methods and conditions, the resistance was calculated using the voltage and current during discharge (($V_0$-$V_1$)/I, where $V_0$ is a discharge start voltage, $V_1$ is a voltage after 60 seconds of discharge, and I is an applied current), and the resistance increase rate was calculated by using the post-cycle resistance compared to the initial resistance. The results are shown in Table 3 below.

[Table 3]

|  | Volume change rate (%) | Capacity retention rate at 45°C (%) | Resistance increase rate at 45°C (%) |
|---|---|---|---|
| Example 1 | 112 | 94 | 120 |
| Example 2 | 109 | 93 | 117 |
| Example 3 | 107 | 92 | 114 |
| Example 4 | 110 | 92 | 120 |
| Comparative Example 1 | 121 | 92 | 129 |
| Comparative Example 2 | 115 | 90 | 128 |
| Comparative Example 3 | 118 | 92 | 126 |
| Comparative Example 4 | 130 | 88 | 145 |

Referring to Table 3 above, in the case of cells to which the positive electrode active materials according to Examples 1 and 2 were applied, the volume change rate after storage for 4 weeks was relatively lower than that of cells to which the positive electrode active materials of Comparative Examples 1 to 4 were applied. This shows that when the positive electrode active materials according to the present invention were applied, the high temperature storage characteristics of the battery were improved. In particular, in the case of Comparative Example 4, it can be seen that the crack rate was high and thus, gas was severely generated due to a side reaction with an electrolyte. In addition, it can be seen that the capacity retention rate of the mono cell using the positive electrode active materials of Examples 1 to 4 is 92% or more under 300 cycle conditions, whereas the capacity retention rate of the mono cell using the positive electrode active material powders of Comparative Examples 1 to 4 is lower than that. Further, it can be seen that the increase in resistance was at least 6% to 15% or more and was greater, and thus, the output performance is also excellent in the examples. That is, it can be seen that when the positive electrode active materials according to the present invention are applied, high temperature lifespan and output characteristics were improved.

**Claims**

1. A positive electrode active material including:
   a lithium nickel-based transition metal oxide with a large particle diameter and a lithium nickel-based transition metal oxide with a small particle diameter,

   wherein the lithium nickel-based transition metal oxide with a large particle diameter is in the form of a secondary particle that is an aggregate of primary particles,
   wherein the lithium nickel-based transition metal oxide with a small particle diameter is in the form of at least one of a single particle formed of one nodule and a quasi-single particle that is a composite of 30 or less nodules, and
   wherein a P value defined by the following Equation 1 is 1.00 or more:

   $$[\text{Equation 1}]$$

   $$P = (A_L \times R_L \times C_L) / B_S$$

   wherein the $A_L$, $R_L$, and $C_L$ are respectively an aspect ratio, a circularity, and a convexity of the large-particle-diameter lithium nickel-based transition metal oxide, and the $B_S$ is an unitless number of a BET specific surface area ($m^2$/g) of the small-particle-diameter lithium nickel-based transition metal oxide.

2. The positive electrode active material according to claim 1, wherein the P value derived from Equation 1 above is 1.00 to 2.50.

3. The positive electrode active material according to claim 1, wherein the large-particle-diameter lithium nickel-based transition metal oxide has an aspect ratio of 0.85 or more, a circularity of 0.85 or more, and a convexity of 0.935 or more.

4. The positive electrode active material according to claim 1, wherein the small-particle-diameter lithium nickel-based transition metal oxide has an aspect ratio of 0.80 or more, a circularity of 0.80 or more, and a convexity of 0.900 or more.

5. The positive electrode active material according to claim 1, wherein the large-particle-diameter lithium nickel-based transition metal oxide has a BET specific surface area of 0.40 $m^2$/g to 0.60 $m^2$/g.

6. The positive electrode active material according to claim 1, wherein the small-particle-diameter lithium nickel-based transition metal oxide has a BET specific surface area of 0.60 $m^2$/g to 1.10 $m^2$/g.

7. The positive electrode active material according to claim 1, wherein the lithium nickel-based transition metal oxide is represented by the following chemical formula (1):

   [Chemical Formula 1]        $Li_{l+x}Ni_aCoe^{Ml}{}_cM2_dO_{2-e}X_e$

   wherein $M^1$ includes one or more selected from Mn and Al; $M^2$ includes one or more selected from the group consisting of W, Zr, Y, Ba, Ca, Ti, V, Mg, Ta and Nb; X includes one or more selected from the group consisting of N, P, S, F and Cl; and $0 \leq x \leq 0.5$, $0.5 \leq a < 1$, $0 < b \leq 0.4$, $0 < c \leq 0.4$, $0 \leq d \leq 0.05$, and $0 \leq e \leq 0.05$.

8. The positive electrode active material according to claim 1, wherein each of the lithium nickel-based transition metal oxide with a large particle diameter and the lithium nickel-based transition metal oxide with a small particle diameter independently have a nickel content in the transition metal of 70 mol% or more.

9. A positive electrode comprising the positive electrode active material according to any one of claims 1 to 8.

10. A lithium secondary battery comprising the positive electrode of claim 9.

## INTERNATIONAL SEARCH REPORT

| International application No. |
|---|
| **PCT/KR2023/021399** |

| A. | CLASSIFICATION OF SUBJECT MATTER |
|---|---|

**H01M 4/525**(2010.01)i; **H01M 4/505**(2010.01)i; **H01M 4/131**(2010.01)i; **H01M 10/052**(2010.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/525(2010.01); C01G 53/00(2006.01); H01M 10/05(2010.01); H01M 10/052(2010.01); H01M 4/36(2006.01); H01M 4/48(2010.01); H01M 4/485(2010.01); H01M 4/505(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극 활물질(cathode active material), 2차입자(secondary particle), 단입자(single particle), 종횡비(aspect ratio), 원형도(sphericity), 볼록도(convexity)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-2009-0094856 A (SANTOKU CORPORATION) 08 September 2009 (2009-09-08)<br>See claims 1 and 11-12; and paragraphs [0001], [0031] and [0033]. | 1-10 |
| A | JP 2022-042478 A (ECOPRO BM CO., LTD.) 14 March 2022 (2022-03-14)<br>See entire document. | 1-10 |
| A | KR 10-2020-0070649 A (LG CHEM, LTD.) 18 June 2020 (2020-06-18)<br>See entire document. | 1-10 |
| A | KR 10-2020-0030287 A (LG CHEM, LTD.) 20 March 2020 (2020-03-20)<br>See entire document. | 1-10 |
| A | KR 10-2020-0001230 A (SAMSUNG ELECTRONICS CO., LTD.) 06 January 2020 (2020-01-06)<br>See entire document. | 1-10 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **09 April 2024** | **09 April 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/021399**

| Patent document cited in search report | | | Publication date (day/month/year) | Patent family member(s) | | | Publication date (day/month/year) |
|---|---|---|---|---|---|---|---|
| KR | 10-2009-0094856 | A | 08 September 2009 | CN | 101584062 | A | 18 November 2009 |
| | | | | CN | 101584062 | B | 25 November 2015 |
| | | | | EP | 2110871 | A1 | 21 October 2009 |
| | | | | EP | 2110871 | B1 | 02 May 2012 |
| | | | | JP | 2010-078784 | A1 | 30 April 2010 |
| | | | | JP | 4287901 | B2 | 01 July 2009 |
| | | | | KR | 10-1447453 | B1 | 06 October 2014 |
| | | | | US | 2010-0019194 | A1 | 28 January 2010 |
| | | | | US | 8920687 | B2 | 30 December 2014 |
| | | | | WO | 2008-078784 | A1 | 03 July 2008 |
| JP | 2022-042478 | A | 14 March 2022 | CN | 114203981 | A | 18 March 2022 |
| | | | | EP | 3965183 | A1 | 09 March 2022 |
| | | | | JP | 2023-118940 | A | 25 August 2023 |
| | | | | KR | 10-2022-0030027 | A | 10 March 2022 |
| | | | | KR | 10-2022-0066232 | A | 24 May 2022 |
| | | | | KR | 10-2397756 | B1 | 13 May 2022 |
| | | | | KR | 10-2511736 | B1 | 20 March 2023 |
| | | | | US | 2022-0069289 | A1 | 03 March 2022 |
| KR | 10-2020-0070649 | A | 18 June 2020 | KR | 10-2543571 | B1 | 15 June 2023 |
| | | | | US | 2020-0185714 | A1 | 11 June 2020 |
| KR | 10-2020-0030287 | A | 20 March 2020 | KR | 10-2520065 | B1 | 11 April 2023 |
| KR | 10-2020-0001230 | A | 06 January 2020 | CN | 112189268 | A | 05 January 2021 |
| | | | | EP | 3762985 | A1 | 13 January 2021 |
| | | | | KR | 10-2553570 | B1 | 10 July 2023 |
| | | | | US | 11489150 | B2 | 01 November 2022 |
| | | | | US | 2020-0006758 | A1 | 02 January 2020 |
| | | | | WO | 2020-004882 | A1 | 02 January 2020 |

Form PCT/ISA/210 (patent family annex) (July 2022)

**REFERENCES CITED IN THE DESCRIPTION**

**Patent documents cited in the description**

- KR 1020220184869